# EUROPEAN PATENT SPECIFICATION

(11) **EP 1 868 271 B1**
(45) Date of publication and mention of the grant of the patent: **04.12.2019**
(21) Application number: 07110030.9
(22) Date of filing: 12.06.2007
(51) Int. Cl.: H02G 3/10

(54) **A fixing device**
Befestigungsvorrichtung
Dispositif de fixation

(30) Priority: 12.06.2006 SE 0601318
(43) Date of publication of application: 19.12.2007
(73) Proprietor: THORSMAN & CO AB, 611 29 Nyköping (SE)
(72) Inventor: Prytz, Erik, 582 23 Linköping (SE)
(74) Representative: Groth & Co. KB

(56) References cited:
- DE-A1- 10 036 727
- FR-A1- 2 804 547
- US-A1- 2004 014 340

## Description

### Technical field

The present invention relates to a fixing device for securing apparatus boxes and electrical junction boxes to batten-work that includes a channel which extends longitudinally in the length direction of a batten and which is defined by two longitudinal side walls. More specifically, the invention relates to a fixing device intended for fixating flush-mounted apparatus or electrical junction boxes, although other areas of use of the invention are also conceivable.

According to other aspects the invention relates to an installation system which includes an installation box or an apparatus box and a batten to which the box is intended to be fastened with a fixing or fastening device.

In further aspects the invention relates to a method of fastening an installation box or apparatus box to a batten.

### Background of the invention

Electrical installations are carried out in buildings with the aid of electrical junction boxes and apparatus boxes so as to provide an insulated space for coupling points and the connection of electrical contact elements and electrical outlets of different kinds. The most usual way of flush-mounting apparatus boxes or electrical junction boxes in different types of wall structures or batten work is to nail, glue or screw the boxes directly to the wall or to a batten. When mounting the boxes on wooden battens it is normal to nail the boxes firmly to the batten by driving nails through the vertical channels in the box. In order to enable a box to be fastened to a batten more readily, there is used some form of batten fastener. The fastener is nailed or screwed firmly to a batten with the aid of an appropriate tool. The box can be fastened to the fastener both before and after the fastener has been firmly secured to the batten.

In order to achieve good building economy on construction sites it is necessary that work can be carried out quickly, simply and smoothly. In order to enable the installation work to be carried out quickly in simple working stages there is at present a new type of batten for constructions with batten work. This batten has been produced so as to have the best possible shape stability and, to this end, is comprised of three parts which are glued together to form a U-shaped profile. It would be possible to use the batten fasteners described above in the future also with this type of batten. The drawback with the earlier known batten fasteners is that the work required to mount the batten fastener and to remove and move the same batten fastener after it has been fitted to the batten is highly demanding. Another drawback with earlier known batten fasteners is that they are often screwed or nailed firmly in a wooden batten or a metal batten, which requires the use of some sort of tool for both firmly mounting the batten fastener and for removing the same fastener. Consequently, in order to further improve the workflow there is desired a fixing device which can be fastened quickly and readily to the new type of batten. There is also desired a fixing device which will allow the position of the box to be adjusted subsequently along the batten. There is also desired a fixing device which enables devices to be mounted on this new type of batten without requiring additional fastener elements or the use of tools.

A fixing devices according to the preamble of independent claim 1 is described in document US 2004/014340 A1. Further fixing devices for holding installation boxes are for instance shown in DE 100 36 727 A1 and FR 2 804 547 A1.

### Object of the invention

The object of the present invention is thus to provide an improved fixing device which can be mounted on and readily dismounted from a batten that has a longitudinal channel which extends in the longitudinal direction of the batten and which is defined by two longitudinal side walls, without the use of a tool. Another object is to provide a fixing device which fixes in the batten flush-mounted apparatus boxes or electrical junction boxes, so as to prevent the apparatus or junction boxes from sliding along the channel in the batten or being loosened unintentionally from the channel.

### Summary of the invention

The aforesaid object is achieved by the present invention as defined in the independent claim 1. Suitable embodiments of the invention are set forth in the dependent claims.

Thus, there is defined in accordance with the present invention a fixing device for securing installation boxes in batten work in which the battens include a longitudinally extending channel which is defined by two longitudinal side walls. The fixing device according to the invention includes a leg part which is adapted for mounting the fixing device in the channel of the batten, and the fixing device also includes a holder part which is adapted to enable an installation box or apparatus box to be fastened to the fixing device. The leg part includes two outwardly projecting spring elements which can be squeezed together towards one another from a relaxed state while overcoming a spring force. Each spring element has thereby an inner end fastened to the holder part and a free outer end, whereby the distance between the spring elements decreases from the inner ends to the outer ends in a non-loaded or relaxed state. At least one of said spring elements includes an outward projection, which lies against the outer surface of said sidewall of the batten in the mounted state of the fixing device.

The inventive fixing device affords the benefit of enabling it to be mounted quickly and readily in the channel of the batten or in the U-shaped profile thereof by virtue of the fact that a user is able to move the spring elements of the fixing device into and out of the channel in the batten by gripping the spring element between his or her thumb and index finger and squeezing the elements together. Thus, no tool or other auxiliary devices are required for fitting and removing the fixing device to and from the batten.

Another benefit of the above is that the holder part of the fixing device bridges the channel in the batten, and that the spring elements can be formed so that a part of respective spring elements will be generally horizontal and therewith able to lie against respective edges of the batten side walls. This enables the spring elements to be reached and readily pressed together with a thumb/index finger grip when fitting and removing the fixing device into and out of the longitudinal channel in the batten. In addition, the distance between a mounted box and the batten becomes greater, which is beneficial when a door shall be provided with broad door linings. Because the distance between the box and the batten becomes greater, there is less risk of the box opening being covered by a door lining after the box has been installed.

The above described fixing device may further ensure that a box and a fixing device will be properly mounted and that the box and device are able to withstand stresses and strains when mounted.

According to one beneficial embodiment, the spring element is adapted to be pressed outwards against the sidewalls with a spring force when the spring element is in a mounted position. This prevents the fixing device from sliding along the longitudinal channel in the batten and also from being loosened accidentally from the channel.

It is, of course, also possible to design the fixing device so that it can be fitted in a batten by inserting the fixing device parallel with the longitudinal axis of the batten and then turning the fixing device generally through 90° so as to cause the device to grip in the longitudinal channel of the batten.

According to one beneficial embodiment of the invention, each spring element is provided with a projection that is directed away from the other spring element. As a result, the spring elements grip into the sidewalls of the batten therewith securing the device firmly in the channel in the batten.

According to one beneficial embodiment, the holder part includes at least one rail or bar that is adapted to secure a box. This enables the box to be fastened to the fixing device quickly and easily. This at least one bar or rail will beneficially extend downwards from the holder part and beyond one of the inner ends of the spring element. As a result, one spring element will be stiff and therewith more difficult to press towards the other spring element. The benefit afforded in this way is that the spring elements will always be level with one side wall of the batten, which ensures that the box will fit at the correct level when wall panels are finally in place.

According to one beneficial embodiment of the invention, the holder part includes a projection which lies against the bottom of the box when the box is fitted to the fixing device. The benefit thus afforded is that a box that has been mounted on the fixing device will not be lost from the fixing device during mounting or when the box is subjected to a heavy load.

The aforementioned can be achieved by virtue of a method, wherein the method includes the particular measures in which two spring elements that project out from one leg part of the fixing device are pressed towards each other from a non-loaded state while overcoming a spring force such as to mount the fixing device in the batten channel, and wherein an installation box or apparatus box is fastened to a holder part of the fixing device.

### Brief description of the drawings

The invention will now be described in more detail with reference to a nonlimiting exemplifying embodiment and with reference to the accompanying drawings, in which
Fig. 1 is a perspective view of a fixing device according to the present invention;
Fig. 2 is a side view of one embodiment of the fixing device according to the present invention;
Fig. 3 illustrates how a fixing device according to the present invention is fastened to a batten and shows an installation box mounted on the fixing device, with the fixing device, the batten and the installation box being shown in side view; and
Fig. 4 is a perspective view of one embodiment of the fixing device according to the present invention disposed in a batten, with the installation box having been mounted on the fixing device.

### Detailed description of the invention at present preferred

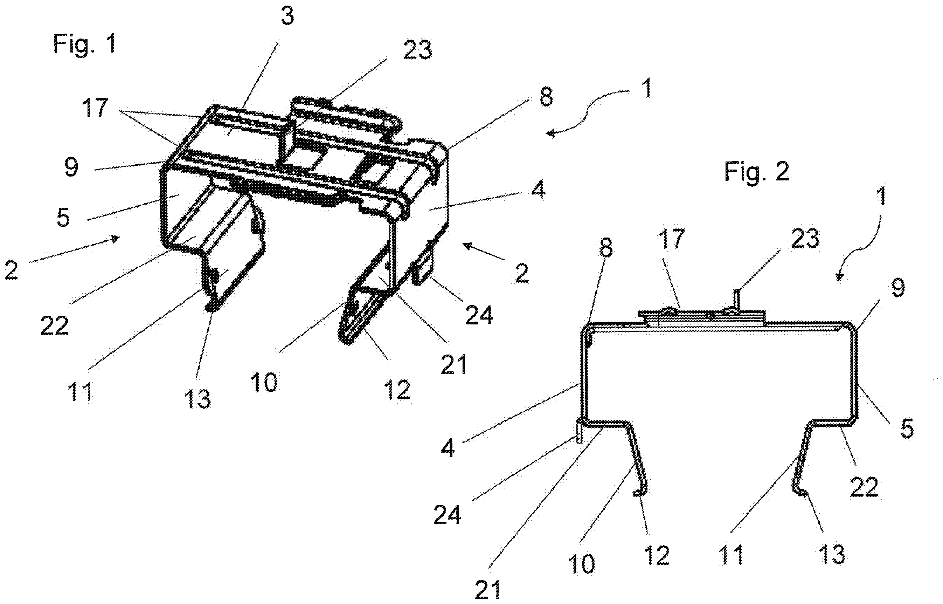

Figures 1 through 4 illustrate an embodiment of the present invention applied on a fixing device intended for fastening installation boxes and apparatus boxes in battens that include a channel which extends in the longitudinal direction of the batten and which is defined by two longitudinal sidewalls. It will, however, be emphasized at once that the invention is in no way restricted to this type of fixing device, but can be applied to any fixing device whatsoever.

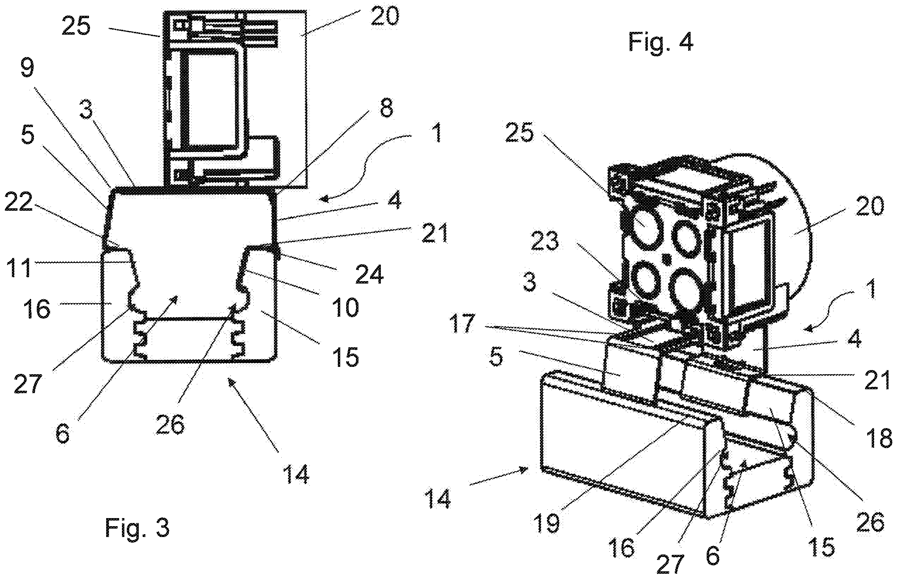

Figure 1 is a perspective view of a fixing device 1 according to the present invention. In the case of the illustrated embodiment, the fixing device 1 includes a leg part 2 and a holder part 3. The leg part 2 includes two outwardly projecting spring elements 4, 5 which can be pressed together towards one another from a non-loaded state by applying to the spring elements 4, 5 a force greater than that exerted by the spring elements 4, 5. This enables the fixing device to be inserted into the channel 6 extending longitudinally in the longitudinal direction of the batten 14 (see figures 3 and 4). As the spring elements 4, 5 are then released, they are pressed outwards by the spring force exerted and into abutment with the sidewalls 15, 16 of the batten 14 therewith securing the device 1 in the channel 6 of the batten 14 (see figures 3, 4). The fixing device 1 can be released from the longitudinal channel 6 or moved along said channel 6 by squeezing the spring elements 4, 5 together with a simple thumb/index finger squeezing action such as to overcome the spring force, wherewith the spring elements 4, 5 are released from the sidewalls 15, 16 of the batten 14, therewith enabling the fixing device 1 to be moved along or removed from the sidewalls 15, 16 of the batten 14.

That surface of the holder part 3 which faces away from the leg part 2 includes a rail or a bar 17 which extends along said surface and which is adapted for the attachment of a box 20. One and the same fixing device is adapted to enable it to be mounted in battens of mutually different sizes/widths. For instance, it is possible to mount the same fixing device in battens measuring 45^{∗}66, 45^{∗}70, 45^{∗}75 and 45^{∗}95. The fixing device is preferably a unit made from metal sheet.

Figure 2 is a side view of the fixing device 1 and shows that each spring element 4, 5 has an inner end 8, 9 fastened to the holder part 3, and a free outer end 10, 11, wherein the distance between the spring elements 4, 5 in the absence of load decreases from the inner ends 8, 9 to the outer ends 10, 11. This enables the spring elements 4, 5 to be given a part 21, 22 that is generally horizontal and that can lie in abutment with respective edges 18, 19 of the batten sidewalls 15, 16. The benefit afforded in this regard is that the spring elements 4, 5 can be easily reached and squeezed together when so desired. Moreover, the distance between the box 20 and the batten 14 is increased, which is beneficial when a door shall be provided with broad door linings. Because the distance of the box 20 and the batten 14 becomes greater, there is less risk of the box opening being covered by a door lining when the lining is fitted. In order to ensure that the spring elements 4, 5 are able to fasten satisfactorily against the sidewalls 15, 16 of the batten 14, each of the spring elements 4, 5 is provided with a projection 12, 13 which faces away from the other spring element 4, 5 and which is able to grip in the sidewalls 15, 16. In order to ensure that a box 20 mounted on the fixing device 1 will not be lost from the fixing device 1 when mounting the box or if the box 20 is subjected to a heavy force, the holder part 3 is provided with a projection 23 which prevents the box 20 from being displaced along the bar 17 on the fixing device 1 beyond a pre-determined position. When the box 20 is mounted, the projection 23 will lie against the bottom 25 of the box 20 (see figure 4). In order to further ensure that the box 20 and the fixing device 1 are properly mounted and that they are able to withstand any stresses and strains, even when mounted, the spring element 4 also includes a projection 24 which is intended to lie against the outside of the sidewall 15 of the batten 14 when the fixing device 1 is mounted.

Figure 3 shows the fixing device 1 fastened to a batten 14 and an installation box 20 that has been mounted on the device 1. The installation box 20, the fixing device 1 and the batten 14 are shown in side view.

Figure 4 also shows the fixing device 1 and the box 20 mounted on the batten 14. The sidewalls 15, 16 of the illustrated batten 14 include longitudinally extending openings 26, 27 so as to fasten the fixing device 1 to the sidewalls 15, 16 of the batten 14 to the best possible effect. Figure 4 also shows how the box 20 is fastened to the bar 17 on the holder part 3. The projection 23 lies against the bottom 25 of the box 20 so as to prevent the box 20 from being displaced further along the bar 17 on the fixing device 1.

## Claims

1. A fixing device (1) for fastening installation boxes and apparatus boxes (20) in battens (14) that include a channel (6) which extends longitudinally along the batten (14) and which is defined by two longitudinal sidewalls (15, 16), wherein the fixing device (1) includes a leg part (2) adapted for mounting the fixing device (1) in the channel (6) of the batten (14), and a holder part (3) which is adapted to enable an installation box or apparatus box (20) to be fastened to the fixing device (1), wherein the leg part (2) includes two outwardly projecting spring elements (4, 5) which can be squeezed together from a non-loaded state while overcoming a spring force, wherein each spring element (4, 5) has an inner end (8, 9) fastened to the holder part (3), and a free outer end (10, 11), wherein the distance between the spring elements (4, 5) decreases from the inner ends (8, 9) to the outer ends (10, 11) in a non-loaded state, **characterized in that** at least one of said spring elements (4, 5) includes an outward projection (24) which lies against the outer surface of said sidewall (15, 16) of the batten (14) in the mounted state of the fixing device (1).

2. A fixing device according to claim 1, **characterized in that** the spring element (4, 5) is adapted to be pressed out against the sidewalls (15, 16) in a mounted state.

3. A fixing device according to any one of claims 1-2, **characterized in that** each spring element (4, 5) includes a projection (12, 13) which faces away from the other spring element (4, 5).

4. A fixing device according to any one of claims 1-3, **characterized in that** the holder part (3) includes at least one bar or rail (17) adapted for the attachment of a box (20).

5. A fixing device according to claim 4, **characterized in that** said at least one bar (17) extends downwards from the holder part (3) beyond at least one of the inner ends (8, 9) of the spring element (4, 5).

6. A fixing device according to any one of claims 1-5, **characterized in that** the holder part (3) includes an outward projection (23) which lies against the bottom (25) of the box (20) when the box is fitted to the fixing device (1).

7. An installation system comprising an installation box or an apparatus box (20) and the batten (14) to which the box (20) is intended to be fastened, **characterized in that** the system further comprises a fixing device (1) according to any of claims 1 to 6, for fastening the box (20) to the batten (14), wherein the batten (14) includes the channel (6) which extends longitudinally in the longitudinal direction of the batten and which is defined by the two longitudinal sidewalls (15, 16), wherein the fixing device (1) includes the leg part (2) adapted for mounting the fixing device (1) in the channel (6) of the batten (14), and the holder part (3) adapted to enable the installation box or apparatus box (20) to be fastened to the fixing device (1).

## Patentansprüche

1. Befestigungsvorrichtung (1) zum Fixieren von Installationsdosen und Geräteeinbaudosen (20) in Leisten (14), die einen Kanal (6) enthalten, der sich in Längsrichtung entlang der Leiste (14) erstreckt und durch zwei in Längsrichtung verlaufende Seitenwände (15, 16) definiert ist, wobei die Befestigungsvorrichtung (1) einen Schenkelteil (2), der dazu eingerichtet ist, die Befestigungsvorrichtung (1) im Kanal (6) der Leiste (14) zu montieren, und einen Halterungsteil (3), der dazu eingerichtet ist, eine Installationsdose oder Geräteeinbaudose (20) an der Befestigungsvorrichtung (1) zu fixieren, enthält, wobei der Schenkelteil (2) zwei nach außen vorstehende Federelemente (4, 5) enthält, die unter Überwindung einer Federkraft aus einem unbelasteten Zustand zusammengedrückt werden können, wobei jedes Federelement (4, 5) ein inneres Ende (8, 9), das am Halterungsteil (3) fixiert ist, und ein freies äußeres Ende (10, 11) aufweist, wobei der Abstand zwischen den Federelementen (4, 5) von den inneren Enden (8, 9) zu den äußeren Enden (10, 11) im unbelasteten Zustand abnimmt, **dadurch gekennzeichnet, dass** mindestens eins der Federelemente (4, 5) einen auswärts gerichteten Vorsprung (24) enthält, der im montierten Zustand der Befestigungsvorrichtung (1) an der Außenfläche der Seitenwand (15, 16) der Leiste (14) aufliegt.

2. Befestigungsvorrichtung nach Anspruch 1, **dadurch gekennzeichnet, dass** das Federelement (4, 5) dazu eingerichtet ist, im montierten Zustand nach außen gegen die Seitenwände (15, 16) gedrückt zu werden.

3. Befestigungsvorrichtung nach einem der Ansprüche 1-2, **dadurch gekennzeichnet, dass** jedes Federelement (4, 5) einen Vorsprung (12, 13) enthält, der von dem anderen Federelement (4, 5) abgewandt ist.

4. Befestigungsvorrichtung nach einem der Ansprüche 1-3, **dadurch gekennzeichnet, dass** der Halterungsteil (3) mindestens eine Stange oder Schiene (17) enthält, die zur Montage einer Dose (20) eingerichtet ist.

5. Befestigungsvorrichtung nach Anspruch 4, **dadurch gekennzeichnet, dass** sich die mindestens eine Stange (17) vom Halterungsteil (3) über mindestens eins der inneren Enden (8, 9) des Federelements (4, 5) hinaus nach unten erstreckt.

6. Befestigungsvorrichtung nach einem der Ansprüche 1-5, **dadurch gekennzeichnet, dass** der Halterungsteil (3) einen auswärts gerichteten Vorsprung (23) enthält, der am Boden (25) der Dose (20) aufliegt, wenn die Dose in der Befestigungsvorrichtung (1) eingesetzt ist.

7. Installationssystem, das eine Installationsdose oder eine Geräteeinbaudose (20) und die Leiste (14), an der die Dose (20) fixiert werden soll, umfasst, **dadurch gekennzeichnet, dass** das System ferner eine Befestigungsvorrichtung (1) nach einem der Ansprüche 1 bis 6 umfasst, um die Dose (20) an der Leiste (14) zu fixieren, wobei die Leiste (14) den Kanal (6) enthält, der sich längs in Längsrichtung der Leiste erstreckt und durch die zwei in Längsrichtung verlaufenden Seitenwände (15, 16) definiert wird, wobei die Befestigungsvorrichtung (1) einen Schenkelteil (2) enthält, der dazu eingerichtet ist, die Befestigungsvorrichtung (1) im Kanal (6) der Leiste (14) zu montieren, und der Halterungsteil (3) dazu eingerichtet ist, die Fixierung der Installationsdose oder der Geräteeinbaudose (20) an der Befestigungsvorrichtung (1) zu ermöglichen.

## Revendications

1. Dispositif de fixation (1) pour la fixation de boîtes d'installation et de boîtes d'appareil (20) dans des lattes (14) qui comprennent un canal (6) qui s'étend longitudinalement le long de la latte (14) et qui est défini par deux parois latérales longitudinales (15, 16), dans lequel le dispositif de fixation (1) comprend une partie pied (2) adaptée pour monter le dispositif de fixation (1) dans le canal (6) de la latte (14) et une partie support (3) qui est adaptée pour permettre à une boîte d'installation ou boîte d'appareil (20) de se fixer sur le dispositif de fixation (1), la partie pied (2) comprenant deux éléments élastiques (4, 5) faisant saillie vers l'extérieur qui peuvent être serrés ensemble à partir d'un état non chargé tout en surmontant une force élastique, chaque élément élastique (4, 5) ayant une extrémité intérieure (8, 9) fixée à la partie support (3), et une extrémité extérieure libre (10, 11), la distance entre les éléments élastiques (4, 5) décroissant des extrémités intérieures (8, 9) aux extrémités extérieures (10, 11) dans un état non chargé,
**caractérisé en ce qu'**au moins l'un desdits éléments élastiques (4, 5) comprend une saillie vers l'extérieur (24) qui repose contre la surface extérieure de ladite paroi latérale (15, 16) de la latte (14) dans l'état monté du dispositif de fixation (1).

2. Dispositif de fixation selon la revendication 1, **caractérisé en ce que** l'élément élastique (4, 5) est adapté pour être pressé contre les parois latérales (15, 16) dans un état monté.

3. Dispositif de fixation selon l'une quelconque des revendications 1 à 2, **caractérisé en ce que** chaque élément élastique (4, 5) comprend une saillie (12, 13) qui fait face à l'autre élément élastique (4, 5).

4. Dispositif de fixation selon l'une quelconque des revendications 1 à 3, **caractérisé en ce que** la partie support (3) comprend au moins une barre ou un rail (17) adapté(e) pour la fixation d'une boîte (20).

5. Dispositif de fixation selon la revendication 4, **caractérisé en ce que** ladite au moins une barre (17) s'étend vers le bas à partir de la partie support (3) au-delà d'au moins l'une des extrémités intérieures (8, 9) de l'élément élastique (4, 5).

6. Dispositif de fixation selon l'une quelconque des revendications 1 à 5, **caractérisé en ce que** la partie support (3) comprend une saillie vers l'extérieur (23) qui repose contre le fond (25) de la boîte (20) lorsque la boîte est montée sur le dispositif de fixation (1).

7. Système d'installation comprenant une boîte d'installation ou une boîte d'appareil (20) et la latte (14) sur laquelle la boîte (20) est destinée à être fixée, **caractérisé en ce que** le système comprend en outre un dispositif de fixation (1) selon l'une quelconque des revendications 1 à 6, pour fixer la boîte (20) à la latte (14), la latte (14) comprenant le canal (6) qui s'étend longitudinalement dans la direction longitudinale de la latte et qui est défini par les deux parois latérales longitudinales (15, 16), le dispositif de fixation (1) comprenant la partie pied (2) adaptée pour monter le dispositif de fixation (1) dans le canal (6) de la latte (14), et la partie support (3) adaptée pour permettre la fixation de la boîte d'installation ou de la boîte d'appareil (20) au dispositif de fixation (1).
